# EUROPÄISCHE PATENTSCHRIFT

(11) **EP 3 491 497 B1**
(45) Veröffentlichungstag und Bekanntmachung des Hinweises auf die Patenterteilung: **25.11.2020**
(21) Anmeldenummer: 17736919.6
(22) Anmeldetag: 04.07.2017
(51) Int. Cl.: G06F 3/0354, B32B 3/00, B60K 37/06, G06F 3/044, B60K 35/00

(54) **TOUCH-EINGABEVORRICHTUNG UND ELEKTRONISCHES SYSTEM FÜR EIN KRAFTFAHRZEUG SOWIE KRAFTFAHRZEUG**
TOUCH INPUT DEVICE AND ELECTRONIC SYSTEM FOR A MOTOR VEHICLE, AND MOTOR VEHICLE
DISPOSITIF D'ENTRÉE TACTILE, SYSTÈME ÉLECTRONIQUE POUR VÉHICULE AUTOMOBILE ET VÉHICULE AUTOMOBILE

(30) Priorität: 28.07.2016 DE 102016213868
(43) Veröffentlichungstag der Anmeldung: 05.06.2019
(73) Patentinhaber: Bayerische Motoren Werke Aktiengesellschaft, 80809 München (DE)
(72) Erfinder: HAIRER, Gabriel, 80807 München (DE); LINDNER, Matthias, 82166 Gräfelfing (DE); WIEDEMANN, Daniel, 82515 Wolfratshausen (DE)
(86) Internationale Anmeldenummer: PCT/EP2017/066539
(87) Internationale Veröffentlichungsnummer: WO 2018/019520

(56) Entgegenhaltungen:
- US-A1- 2007 144 795
- US-A1- 2009 033 636

## Beschreibung

Die vorliegende Erfindung eine Touch-Eingabevorrichtung für ein Kraftfahrzeug zum Bedienen eines Systems, insbesondere eines elektronischen Systems, eines Kraftfahrzeugs. Ferner betrifft die Erfindung ein elektronisches System für ein Kraftfahrzeug sowie ein Kraftfahrzeug.

Es ist eine Vielzahl unterschiedlicher Touch-Eingabevorrichtungen, wie z.B. Touchpads von Notebooks oder Touchscreens von Smartphones oder dergleichen, bekannt. Eine Touch-Eingabevorrichtung weist eine berührungs- bzw. druckempfindliche Bedienfläche auf und ist ausgebildet, eine Position auf der Bedienfläche, die von außen kontaktiert bzw. auf die von außen ein Druck ausgeübt wird, zu ermitteln. Somit ist beispielsweise eine Bewegungsbahn eines auf der Bedienfläche abgleitenden Fingers eines Bedieners bestimmbar. Moderne Touch-Eingabevorrichtungen sind ausgebildet, neben der Ermittlung der Position der Berührung bzw. des Druckes auch eine Stärke des Drucks zu ermitteln. Mittels derartiger Touch-Eingabevorrichtungen sind auch hochkomplexe Steuerbefehle an ein System, insbesondere einem elektronischen System eines Kraftfahrzeugs, wie z.B. einem Navigationssystem, einem Entertainmentsystem, einem Kommunikationssystem, einem Fahrzeugparameterüberwachungssystem oder dergleichen übertragbar.

Herkömmliche Touch-Eingabevorrichtungen weisen eine Touchsensorfläche sowie eine die Touchsensorfläche schützende Deckplatte auf, wobei die Bedienfläche auf einer der Touchsensorfläche abgewandten Plattenoberseite der Deckplatte ausgebildet ist. Bekannte Touchsensorflächen weisen ein Elektrodengitter auf und sind zum Ermitteln einer elektrischen Kapazität zwischen den Elektroden ausgebildet. Externe Störfaktoren, wie z.B. ein Finger eines Bedieners der Touch-Eingabevorrichtung, der auf die Bedienfläche geführt wird, bewirken aufgrund einer von Luft stark abweichenden elektrischen Permittivität eine Veränderung der elektrischen Kapazität zwischen Elektroden. Diese Veränderung der elektrischen Kapazität ist von der Touch-Eingabevorrichtung ermittelbar und auf diese Weise die Position und ggf. die Höhe des auf die Bedienfläche ausgeübten Druck bestimmbar. Aus den Druckschriften US 2007/0144795 A1 und US 2009/0033636 A1 sind verschiedene Touch-Eingabevorrichtungen bekannt.

Um eine hohe Genauigkeit der Position zu ermöglichen, ist die Deckplatte möglichst flächig sowie spaltfrei an der Touchsensorfläche angeordnet. Ein Luftspalt in einem Bereich zwischen der Deckplatte und der Touchsensorfläche würde in diesem Bereich zu einer von den übrigen Bereichen abweichenden Veränderung der elektrischen Kapazität durch Einwirkung von außen führen. Dies macht eine sehr aufwendige Kompensation der von der Touchsensorfläche ermittelten Veränderung der elektrischen Kapazität durch eine Rechnereinheit erforderlich und kann insbesondere bei einer leistungsschwachen Rechnereinheit zu einer ungewollten Verzögerung einer Eingabe des Bedieners führen. Die Verwendung besonders leistungsstarker Recheneinheiten hat den Nachteil hoher Teilekosten sowie eines hohen Energieverbrauchs im Betrieb der Touch-Eingabevorrichtung.

Es ist daher Aufgabe der vorliegenden Erfindung, die voranstehend beschriebenen Nachteile bei einer Touch-Eingabevorrichtung mit einer Abschrägfläche, einem elektronischen System für ein Kraftfahrzeug mit einer derartigen Touch-Eingabevorrichtung sowie einem Kraftfahrzeug mit einem derartigen System zu beheben oder zumindest teilweise zu beheben. Insbesondere ist es Aufgabe der vorliegenden Erfindung eine Touch-Eingabevorrichtung zum Bedienen eines Systems eines Kraftfahrzeugs, ein elektronisches System für ein Kraftfahrzeug sowie ein Kraftfahrzeug zu schaffen, die auf einer einfache und kostengünstige Art und Weise eine Verzögerung einer Eingabe eines Benutzers in Bereichen der Abschrägfläche vermeiden und eine geringere Kompensation der von der Touchsensorfläche ermittelten Veränderung der elektrischen Kapazität erfordern.

Voranstehende Aufgabe wird durch eine Touch-Eingabevorrichtung mit den Merkmalen des Anspruchs 1, durch ein elektronisches System mit den Merkmalen des Anspruchs 11 sowie durch ein Kraftfahrzeug mit den Merkmalen des Anspruchs 12 gelöst. Weitere Merkmale und Details der Erfindung ergeben sich aus den Unteransprüchen, der Beschreibung und den Zeichnungen. Dabei gelten Merkmale und Details, die im Zusammenhang mit der Touch-Eingabevorrichtung beschrieben sind, selbstverständlich auch im Zusammenhang mit dem erfindungsgemäßen elektronischen System sowie dem erfindungsgemäßen Kraftfahrzeug und jeweils umgekehrt, so dass bezüglich der Offenbarung zu den einzelnen Erfindungsaspekten stets wechselseitig Bezug genommen wird beziehungsweise werden kann.

Gemäß dem ersten Aspekt der Erfindung wird die Aufgabe durch eine Touch-Eingabevorrichtung zum Bedienen eines Systems eines Kraftfahrzeugs gelöst. Die Touch-Eingabevorrichtung weist eine Deckplatte aus einem Deckplattenmaterial und eine Touchsensorfläche auf. Die Deckplatte weist eine Plattenoberseite mit einer Bedienfläche und eine Plattenunterseite auf, wobei die Plattenunterseite der Deckplatte der Touchsensorfläche zugewandt ist. Erfindungsgemäß weist die Plattenunterseite mindestens eine Abschrägfläche auf, die schräg zur Touchsensorfläche angeordnet ist, wobei zwischen der Plattenunterseite und der Touchsensorfläche ein Freiraum ausgebildet ist. Die Bedienfläche überragt den Freiraum zumindest teilweise. In dem Freiraum ist ein Füllkörper aus mindestens einem Füllmaterial angeordnet, wobei das mindestens eine Füllmaterial eine Permittivität für elektrische Felder aufweist, die größer als eine Permittivität von Luft ist. Vorzugsweise ist die Permittivität des Füllmaterials näher an einer Permittivität des Deckplattenmaterials als an der Permittivität der Luft.

Die Deckplatte weist ein Deckplattenmaterial auf und ist im Wesentlichen plattenförmig ausgebildet. Die Deckplatte weist eine Plattenoberseite und eine von der Plattenoberseite abgewandte Plattenunterseite auf, wobei vorzugsweise in einem Bereich die Plattenoberseite parallel zur Plattenunterseite angeordnet ist. Auf der Plattenoberseite ist eine Bedienfläche ausgebildet, über die Benutzereingaben an die Touch-Eingabevorrichtung übermittelbar sind. Vorzugsweise ist die Plattenoberseite vollständig oder zumindest im Wesentlichen vollständig als Bedienfläche ausgebildet.

Erfindungsgemäß kann die Deckplatte zur Erfüllung einer Vielzahl unterschiedlicher Funktionen ausgebildet sein. Die Deckplatte deckt die Touchsensorfläche zum Bediener ab und schützt somit die Touchsensorfläche vor äußeren Einflüssen, wie z.B. Staub, Wasser oder dergleichen. Durch Ferner ist die Deckplatte ein optisches und/oder haptisches Gestaltungselement der Touch-Eingabevorrichtung. Durch eine Verblendung, Beschichtung, Beklebung oder dergleichen kann die Deckplatte eine Sicht auf die Touchsensorfläche vollständig oder zumindest teilweise verdecken. Eine möglichst glatte, insbesondere polierte, und/oder platte Oberfläche der Plattenoberseite ist besonders bevorzugt, um ein Abgleiten eines Fingers des Bedieners auf der Plattenoberseite zu verbessern. Die Plattenoberseite kann erfindungsgemäß auch eine Wölbung aufweisen bzw. gewölbt ausgebildet sein. Zusätzlich oder alternativ kann erfindungsgemäß vorgesehen sein, dass die Plattenoberseite lokale Erhebungen und/oder Vertiefungen und/oder Aufrauhungen aufweist, die auf Funktionen der Touch-Eingabevorrichtung hinweisen bzw. diese bezeichnen.

Die Touchsensorfläche ist vorzugsweise als Touchsensorfläche einer herkömmlichen Touchsensorvorrichtung ausgebildet und weist vorzugsweise eine Vielzahl von Elektroden auf, die, insbesondere gleichmäßig bzw. im Wesentlichen gleichmäßig sowie abwechselnd, über die Touchsensorfläche verteilt sind. Die Touch-Eingabevorrichtung bzw. Touchsensorvorrichtung ist vorzugsweise zum Detektieren einer Veränderung einer elektrischen Kapazität zwischen den Elektroden ausgebildet.

Erfindungsgemäß weist die Plattenunterseite mindestens eine Abschrägfläche auf. Unter einer Abschrägfläche wird im Sinne der Erfindung eine Fläche verstanden, die schräg zur Touchsensorfläche angeordnet ist. Die Abschrägfläche ist vorzugsweise schräg zu einer Hauptfläche der Plattenunterseite angeordnet, wobei die Hauptfläche als eine reale, platte Fläche oder als eine gemittelte Fläche aus mehreren schräg zueinander angeordneten Flächen der Plattenunterseite ausgebildet sein kann. Vorzugsweise ist die Abschrägfläche schräg zur Plattenoberseite angeordnet. Weiter bevorzugt ist die Hauptfläche parallel zur Plattenoberseite angeordnet. Die Abschrägfläche kann beispielsweise die Hauptfläche umgeben bzw. zumindest im Wesentlichen oder teilweise umgeben und ist vorzugsweise ringförmig ausgebildet. Alternativ kann die Hauptfläche von mehreren Abschrägflächen umgeben sein, die vorzugsweise ringförmig bzw. im Wesentlichen ringförmig miteinander angeordnet sind. Die Abschrägfläche kann mehrere Funktionen aufweisen, wie z.B. eine optische Verzierung der Touch-Eingabevorrichtung und/oder eine Kennzeichnung einer Funktion der Touch-Eingabevorrichtung, insbesondere eine pfeilartige Ausbildung. Es kann vorgesehen sein, dass die Abschrägfläche ausgebildet ist, eine besondere Brechung des Lichts zu bewirken, um beispielsweise Farb- bzw. Regenbogeneffekte zu erzeugen. Ferner kann erfindungsgemäß vorgesehen sein, dass die Touch-Eingabevorrichtung mindestens eine Leuchtvorrichtung aufweist, die zum Erzeugen eines Lichteffekts, insbesondere zur Kennzeichnung einer Funktion und/oder eines Zustands der Touch-Eingabevorrichtung, in Verbindung mit der mindestens einen Abschrägfläche ausgebildet ist.

Durch die schräge Anordnung der Abschrägfläche zur Touchsensorfläche ist ein Freiraum zwischen der Abschrägfläche und der Touchsensorfläche ausgebildet. Die Bedienfläche überragt die Abschrägfläche. Um eine aufwendige Kompensation beim Benutzen der Bedienfläche in dem Bereich, der die Abschrägfläche überragt, zu vermeiden, ist in dem Freiraum ein Füllkörper aus mindestens einem Füllmaterial angeordnet. Der Füllkörper ist vorzugsweise flexibel ausgebildet, um eine Paarung zwischen Deckplatte und Füllkörper zu erleichtern bzw. zu verbessern. Ferner weist der Füllkörper vorzugsweise keine Kavitäten auf, um eine lokale Veränderung der Permittivität zu vermeiden. Es kann vorgesehen sein, dass der Füllkörper mittels eines Klebemittels oder mittels des Füllmaterials mit der Plattenunterseite und/oder Touchsensorfläche verklebt ist. Weiter kann vorgesehen sein, dass der Füllkörper unterschiedliche Dicken aufweist, insbesondere zum Ausfüllen von Zwischenräumen zwischen der Touchsensorfläche und der Deckplatte. Erfindungsgemäß weist das mindestens eine Füllmaterial eine Permittivität für elektrische Felder auf, die zumindest größer als eine Permittivität von Luft ist. Vorzugsweise entspricht die Permittivität des Füllmaterials einer Permittivität des Deckplattenmaterials zumindest im Wesentlichen. Ferner kann erfindungsgemäß vorgesehen sein, dass sich der Füllkörper auch in einem Bereich der Hauptfläche zwischen der Plattenunterseite und der Touchsensorfläche erstreckt.

Das bedeutet, dass durch den Füllkörper eine Veränderung der Permittivität der Deckplatte im Bereich der Abschrägfläche kompensiert bzw. zumindest im Wesentlichen kompensiert wird, so dass keine aufwendige Kompensation mittels einer kostenintensiven Recheneinheit erforderlich ist. Dies hat den Vorteil, dass eine Eingabe durch einen Benutzer im Bereich der Abschrägfläche somit leicht möglich ist, ohne dass hierdurch eine übermäßige Eingabeverzögerung bewirkt wird. Ein weiterer Vorteil ist, dass eine aufwendige Recheneinheit nicht erforderlich ist und somit Herstellungskosten einsparbar sind. Die erfindungsgemäße Touch-Eingabevorrichtung ermöglicht somit eine Abschrägfläche im Bereich der Bedienfläche der Deckplatte ohne hierdurch entstehende Nachteile.

Zudem weist der Füllkörper eine Ausnehmung auf, in der die Plattenunterseite aufgenommen ist. Dabei ist zumindest der Bereich der Plattenunterseite, der die mindestens eine Abschrägfläche aufweist und sich mit der Bedienfläche überschneidet, in der Ausnehmung angeordnet. Vorzugsweise ist auch die Hauptfläche der Plattenunterseite in der Ausnehmung angeordnet. Auf diese Weise ist die Deckplatte vorzugsweise formschlüssig von dem Füllkörper aufnehmbar, so dass bereits bei dem Zusammenbar der Touch-Eingabevorrichtung mit einfachen Mitteln sowie sicher die Deckplatte an dem Füllkörper bzw. der Füllkörper an der Deckplatte anordenbar ist. Es kann erfindungsgemäß vorgesehen sein, dass kein direkter Kontakt zwischen der Deckplatte und der Touchsensorfläche, sondern nur über den Füllkörper, besteht. Bei einem ringförmigen Füllkörper kann auch ein direkter Kontakt zwischen der Deckplatte und der Touchsensorfläche im Bereich der Hauptfläche bestehen. Ein ringförmiger Füllkörper weist vorzugsweise einen dreieckigen Querschnitt auf. Ein direkter Kontakt zwischen Deckplatte und der Touchsensorfläche im Bereich der Abschrägfläche ist erfindungsgemäß nicht vorgesehen sondern nur über den Füllkörper.

Ferner ist die mindestens eine Abschrägfläche an einem Randbereich der Deckplatte angeordnet. Die Hauptfläche ist somit von der Abschrägfläche nach außen in zumindest eine Richtung begrenzt. Vorzugsweise umgibt die Abschrägfläche die Hauptfläche dabei im Wesentlichen oder komplett. Dabei ist die Abschrägfläche vorzugsweise derart ausgebildet, dass die Hauptfläche näher an der Touchsensorfläche angeordnet ist als die Abschrägfläche. Die Deckplatte weist somit eine Dicke auf, die sich in einem Randbereich durch die Abschrägfläche radial nach außen verjüngt.

Die Plattenoberseite ist plan ausgebildet. Alternativ oder zusätzlich kann die Plattenoberseite zumindest teilweise auch konvex und/oder konkav ausgebildet sein. Eine derartig geformte Deckplatte hat den Vorteil, dass hiermit eine Vielzahl von Eingabebefehlen leicht möglich ist.

Gemäß einer bevorzugten Weiterentwicklung der Erfindung kann bei einer Touch-Eingabevorrichtung vorgesehen sein, dass der Füllkörper die Plattenunterseite und die Touchsensorfläche flächig kontaktiert. Unter einem flächigen Kontaktieren wird im Sinne der Erfindung ein durchgängiges bzw. im Wesentlichen durchgängiges Kontaktieren verstanden, so dass keine bzw. im Wesentlichen keine Spalte zwischen Füllkörper, Plattenunterseite und Touchsensorfläche ausgebildet sind. Das Kontaktieren erfolgt somit über eine gemeinsame Kontaktfläche. Durch ein flächiges Kontaktieren wird der Freiraum durch den Füllkörper, zumindest im Bereich der Bedienfläche, komplett bzw. im Wesentlichen komplett ausgefüllt, so dass eine Permittivität der Paarung aus Deckplatte und Füllkörper zumindest über die Bedienfläche konstant bzw. im Wesentlichen konstant gehalten werden kann. Die Kontaktfläche kann beispielsweise kreisförmig oder ringförmig ausgebildet sein.

Es ist erfindungsgemäß bevorzugt, dass der Füllkörper eine Füllkörperform aufweist, die komplementär zu einer Freiraumform des Freiraums ausgebildet ist. Hierdurch wird ein flächiges Kontaktieren von Füllkörper und Deckplatte verbessert. Eine komplementäre Form hat den Vorteil, dass ein möglichst großflächiges Kontaktieren von Deckplatte und Füllkörper möglich ist. Durch ein elastisches Füllkörpermaterial ist ein derartiges Kontaktieren weiter verbesserbar.

Vorzugsweise ist der Füllkörper zumindest teilweise als Spritzgussteil oder 3D-Druckteil ausgebildet. Alternativ oder zusätzlich ist es bevorzugt, dass das mindestens eine Füllmaterial gießfähig ausgebildet ist. Demnach ist der Füllkörper beispielsweise vor dem Einsetzen in den Freiraum herstellbar oder alternativ als fließfähiges Füllmaterial in den Freiraum einbringbar, um im Freiraum auszuhärten. Ein derartiger Füllkörper ist leicht sowie mit einfachen Mitteln und kostengünstig herstellbar und optimal an eine Form des Freiraums anpassbar.

Weiter bevorzugt ist das mindestens eine Füllmaterial ein Polyamid oder weist zumindest ein Polyamid auf. Polyamid ist gut sowie kostengünstig verfügbar und leicht verarbeitbar. Insbesondere für einen Spritzgießprozess ist Polyamid aufgrund einer leichten Aufschmelzbarkeit gut geeignet.

Es kann erfindungsgemäß vorgesehen sein, dass das mindestens eine Füllmaterial aus einem Gießharz gebildet ist oder zumindest ein Gießharz und/oder einen Klebstoff aufweist. Ein derartiges Füllmaterial ist in fließfähiger Form zur Erzeugung des Füllkörpers in den Freiraum einbringbar und kann sich gut im Freiraum verteilen. Anschließend ist das Füllmaterial durch Abkühlung und/oder durch Zusatz eines Aushärtmittels zu dem Füllkörper aushärtbar. Auf derartigem Gießharz basierende Herstellungsverfahren zur Herstellung des Füllkörpers sind verhältnismäßig kostengünstig und leicht sowie mit einfachen Mitteln durchführbar.

In einer vorteilhaften Ausgestaltung der Erfindung weist die Plattenunterseite eine Mehrzahl von Abschrägflächen auf, die in Form eines Facettenschliffs an der Plattenunterseite angeordnet sind. Vorzugsweise sind die Abschrägflächen dreieckig ausgebildet. Mittels einer derartigen Anordnung von Abschrägflächen ist eine Vielzahl unterschiedlicher optischer Effekte erzielbar. So kann beispielsweise eine pfeilartige Ausbildung der Abschrägflächen eine Bedienfunktion bzw. -richtung der Touch-Eingabevorrichtung indizieren.

Vorzugsweise ist das Deckplattenmaterial Glas oder weist zumindest Glas auf. Dabei ist die Deckplatte vorzugsweise durchsichtig oder zumindest lichtdurchlässig. Es kann vorgesehen sein, dass ein die Touchsensorfläche und/oder den Füllkörper kontaktierender Bereich der Plattenunterseite eine Beschichtung aufweist. Diese Beschichtung ist vorzugsweise nicht durchsichtig und/oder lichtundurchlässig und/oder verspiegelt. Die Beschichtung ist vorzugsweise als Lack und/oder Folie ausgebildet und weiter bevorzugt mit der Deckplatte verklebt oder stoffschlüssig verbunden. Somit ist die Touchsensorfläche mit einfachen Mitteln sowie kostengünstig kaschierbar. Ein derartiges, Glas aufweisendes Deckplattenmaterial ist leicht sowie mit einfachen Mitteln und kostengünstig herstellbar und für spezielle Lichteffekte, insbesondere Lichtbrechungen, besonders geeignet.

Es ist erfindungsgemäß bevorzugt, dass die Permittivität des mindestens einen Füllmaterials maximal um 30% von der Permittivität des Deckplattenmaterials abweicht. Weiter bevorzugt weicht die Permittivität maximal um 15% ab. Erfindungsgemäß ist es besonders bevorzugt, wenn die Permittivität des mindestens einen Füllmaterials maximal um 5% von der Permittivität des Deckplattenmaterials abweicht. Eine möglichst geringe Abweichung der Permittivität hat den Vorteil, dass bei einer Bedienung der Bedienfläche im Bereich der Abschrägfläche keine oder nur eine sehr geringe Kompensation der ermittelten Veränderung der elektrischen Kapazität erforderlich ist. Je mehr die Permittivität des mindestens einen Füllmaterials der Permittivität des Deckplattenmaterials entspricht, desto geringer ist die erforderliche Kompensation und somit der erforderliche Rechenaufwand. Somit sind Kosten für eine aufwendige Recheneinheit reduzierbar bzw. einsparbar.

Es kann erfindungsgemäß vorgesehen sein, dass die Deckplatte eine Gravur und/oder einen Aufdruck aufweist. Die Gravur und/oder der Aufdruck können dabei in Abhängigkeit des Deckplattenmaterials auf der Plattenoberseite und/oder bei durchsichtigem Deckplattenmaterial auf der Plattenunterseite angeordnet sein. Dies hat den Vorteil, dass besondere Funktionen der Touch-Eingabevorrichtung für den Benutzer erkenntlich sind und eine Bedienung somit erleichtert wird.
Gemäß einem zweiten Aspekt der Erfindung wird die Aufgabe durch ein elektronisches System für ein Kraftfahrzeug gelöst. Das elektronische System weist mindestens eine Eingabevorrichtung auf, wobei die mindestens eine Eingabevorrichtung als erfindungsgemäße Touch-Eingabevorrichtung ausgebildet ist. Das elektronische System weist dieselben Vorteile auf, wie bereits voranstehend bezüglich der erfindungsgemäßen Touch-Eingabevorrichtung beschrieben sind. Demnach hat das elektronische System den Vorteil, dass die Deckplatte der Touch-Eingabevorrichtung des elektronischen Systems mindestens eine Abschrägfläche aufweist, wobei eine Eingabe durch einen Benutzer im Bereich der Abschrägfläche somit leicht möglich ist, ohne dass hierdurch eine übermäßige Eingabeverzögerung bewirkt wird. Ein weiterer Vorteil ist, dass das elektronische System keine aufwendige Recheneinheit benötigt und somit Herstellungskosten einsparbar sind. Das erfindungsgemäße elektronische System weist demnach auf vorteilhafte Weise eine Touch-Eingabevorrichtung mit einer Abschrägfläche im Bereich der Bedienfläche der Deckplatte auf, ohne dass hierdurch Nachteile bei der Bedienung entstehen.

Gemäß einem dritten Aspekt der Erfindung wird die Aufgabe durch ein Kraftfahrzeug mit mindestens einem erfindungsgemäßen elektronischen System gelöst. Das Kraftfahrzeug weist dieselben Vorteile auf, wie bereits voranstehend bezüglich der erfindungsgemäßen Touch-Eingabevorrichtung sowie des elektronischen Systems beschrieben sind. Demnach hat das Kraftfahrzeug den Vorteil, dass die Deckplatte der Touch-Eingabevorrichtung des elektronischen Systems des Kraftfahrzeugs mindestens eine Abschrägfläche aufweist, wobei eine Eingabe durch einen Benutzer im Bereich der Abschrägfläche leicht möglich ist, ohne dass hierdurch eine übermäßige Eingabeverzögerung bewirkt wird. Ein weiterer Vorteil ist, dass das elektronische System keine aufwendige Recheneinheit benötigt und somit Herstellungskosten einsparbar sind. Das erfindungsgemäße Kraftfahrzeug weist demnach auf vorteilhafte Weise ein elektronisches System mit einer Touch-Eingabevorrichtung mit einer Abschrägfläche im Bereich der Bedienfläche der Deckplatte auf, ohne dass hierdurch Nachteile bei der Bedienung entstehen.

Eine erfindungsgemäße Touch-Eingabevorrichtung zum Bedienen eines Systems eines Kraftfahrzeugs wird nachfolgend anhand von Zeichnungen näher erläutert. Es zeigen jeweils schematisch:
Figur 1 in einer Draufsicht eine bevorzugte Ausführungsform einer erfindungsgemäßen Touch-Eingabevorrichtung,
Figur 2 in einer Seitenansicht die Touch-Eingabevorrichtung ohne Füllkörper aus Figur 1,
Figur 3 in einer Seitenansicht den Füllkörper aus Figur 1, und
Figur 4 in einer Seitenansicht die Touch-Eingabevorrichtung aus Figur 1.

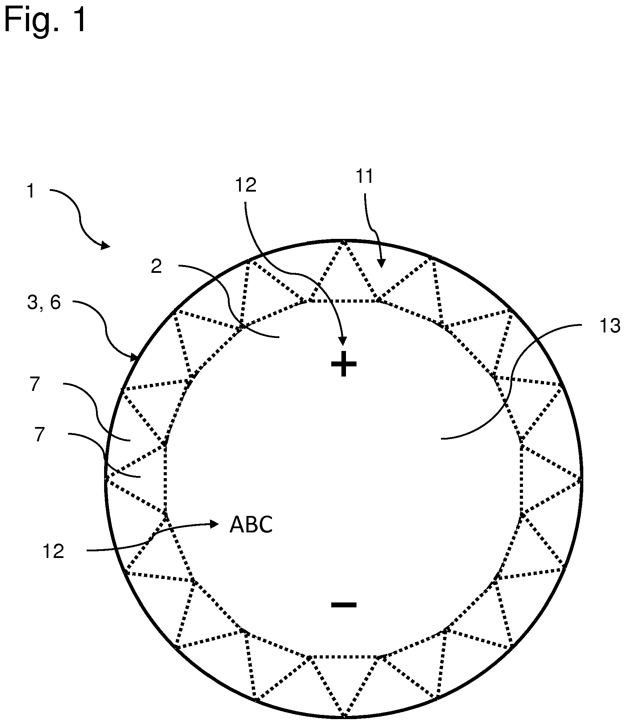

Elemente mit gleicher Funktion und Wirkungsweise sind in den Fig. 1 bis 4 jeweils mit denselben Bezugszeichen versehen.

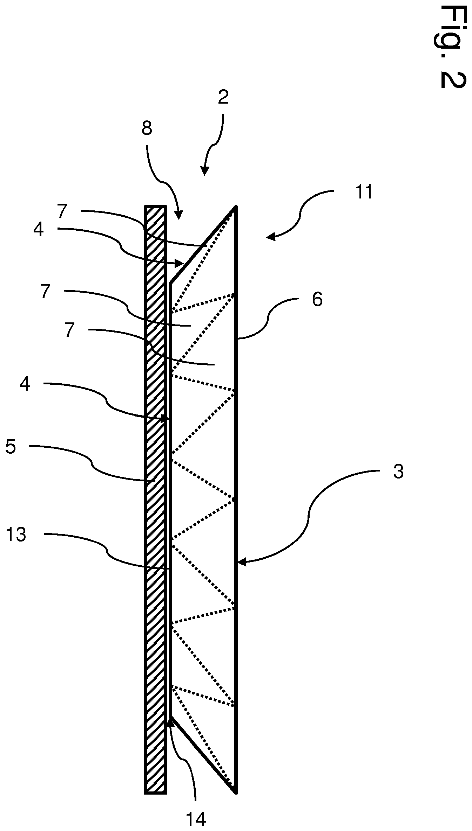

In Fig. 1 ist schematisch eine bevorzugte Ausführungsform einer erfindungsgemäßen Touch-Eingabevorrichtung 1 in einer Draufsicht dargestellt. Die Touch-Eingabevorrichtung 1 weist eine Deckplatte 2 mit einer kreisförmigen Plattenoberseite 3 auf. In einem zentralen Bereich weist die Plattenoberseite 3 mehrere Gravuren 12 auf, die beispielsweise unterschiedliche Funktionen bzw. Eingabeoptionen der Touch-Eingabevorrichtung 1 bezeichnen. In diesem Ausführungsbeispiel ist die Deckplatte 2 aus einem durchsichtigen Deckplattenwerkstoff, wie z.B. Glas, gebildet. Somit sind in einem Randbereich 11 auf einer Plattenunterseite 4 (vgl. Fig. 2) der Deckplatte 2 ausgebildete, dreieckige Abschrägflächen 7 sowie eine von den Abschrägflächen 7 umgebene Hauptfläche 13 der Plattenunterseite 4 erkennbar. Eine Bedienfläche 6 erstreckt sich über die komplette Plattenoberseite 3 und demnach über den Randbereich 11 und die Hauptfläche 13.

Wie aus Fig. 2 besser ersichtlich, weist die Deckplatte 2 eine Plattenunterseite 4 auf, die sich entlang der kompletten Plattenoberseite 3 erstreckt. Die im Randbereich 11 angeordnete Mehrzahl dreieckiger Abschrägflächen 7 ist ebenfalls in dieser Ansicht gut erkennbar. Die Abschrägflächen 7 umgeben eine Hauptfläche 13 der Plattenunterseite 4 vollumfänglich. Der Plattenunterseite 4 benachbart weist die Touch-Eingabevorrichtung 1 eine Touchsensorfläche 5 auf, die sich entlang der kompletten Plattenunterseite 4 plattenförmig erstreckt. In diesem Ausführungsbeispiel ist zwischen der Hauptfläche 13 und der Touchsensorfläche 5 ein Spalt 14 ausgebildet, so dass kein direkter Kontakt zwischen der Touchsensorfläche 5 und der Deckplatte 2 besteht.

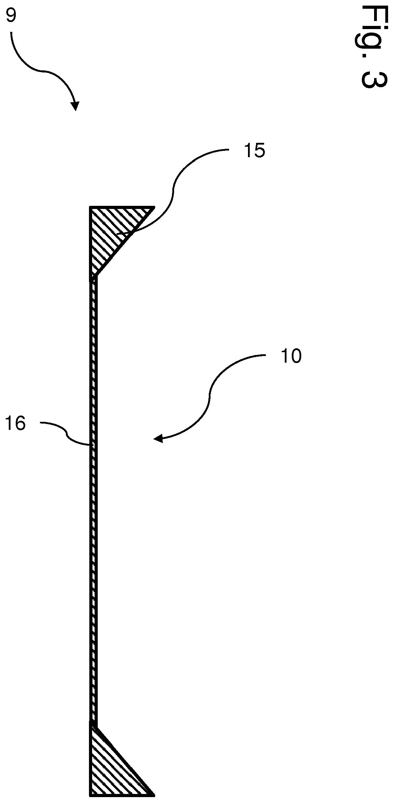

In Fig. 3 ist schematisch ein Füllkörper 9 der bevorzugten Ausführungsform der erfindungsgemäßen Touch-Eingabevorrichtung 1 aus Fig. 1 in einer Seitenansicht dargestellt. Der Füllkörper 9 ist aus einem vorzugsweise homogenen Füllmaterial gebildet. Der Füllkörper weist einen ringförmigen Rand 15 mit einer dreieckigen Querschnittsfläche sowie einen Scheibenbereich 16 auf. Zwischen dem Rand 15 und dem Scheibenbereich 16 ist eine Ausnehmung 10 zur Aufnahme der Deckplatte 2 ausgebildet.

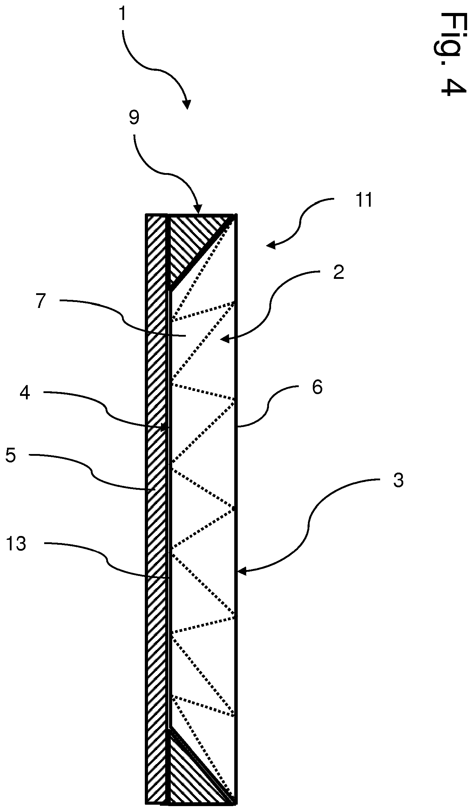

In Fig. 4 ist schematisch die Touch-Eingabevorrichtung 1 aus Figur 1 in einer Seitenansicht abgebildet. Der Füllkörper 9 ist in dem Spalt 14 (vgl. Fig. 2)sowie in dem Freiraum 8 (vgl. Fig. 2) zwischen der Plattenunterseite 4 und der Touchsensorfläche 5 angeordnet. Bei der erfindungsgemäßen Touch-Eingabevorrichtung 1 ist eine Benutzung der sich über die komplette Plattenoberseite 3 erstreckenden Bedienfläche 6 aufgrund der Permittivität des Füllmaterials, die der Permittivität des Deckplattenmaterials entspricht bzw. im Wesentlichen entspricht, ohne eine aufwendige Kompensation durch eine Recheneinheit möglich.

### Bezugszeichenliste

- 1: Touch-Eingabevorrichtung
- 2: Deckplatte
- 3: Plattenoberseite
- 4: Plattenunterseite
- 5: Touchsensorfläche
- 6: Bedienfläche
- 7: Abschrägfläche
- 8: Freiraum
- 9: Füllkörper
- 10: Ausnehmung
- 11: Randbereich
- 12: Gravur
- 13: Hauptfläche
- 14: Spalt
- 15: Rand
- 16: Scheibenbereich

## Patentansprüche

1. Touch-Eingabevorrichtung (1) zum Bedienen eines Systems eines Kraftfahrzeugs, aufweisend eine Deckplatte (2) aus einem Deckplattenmaterial mit einer Plattenoberseite (3) und einer Plattenunterseite (4) und weiter aufweisend eine Touchsensorfläche (5), wobei die Plattenoberseite (3) eine Bedienfläche (6) aufweist, und wobei die Plattenunterseite (4) der Deckplatte (2) der Touchsensorfläche (5) zugewandt ist, wobei die Plattenunterseite (4) mindestens eine Abschrägfläche (7) aufweist, die schräg zur Touchsensorfläche (5) angeordnet ist, wobei zwischen der Plattenunterseite (4) und der Touchsensorfläche (5) ein Freiraum (8) ausgebildet ist, wobei die Bedienfläche (6) den Freiraum (8) zumindest teilweise überragt, wobei ein Füllkörper (9) aus mindestens einem Füllmaterial in dem Freiraum (8) angeordnet ist, und wobei das mindestens eine Füllmaterial eine Permittivität für elektrische Felder aufweist, die größer als eine Permittivität von Luft ist, wobei die mindestens eine Abschrägfläche (7) an einem Randbereich (11) der Deckplatte (2) angeordnet ist, **dadurch gekennzeichnet, dass** der Füllkörper (9) eine Ausnehmung (10) aufweist, in der die Plattenunterseite (4) aufgenommen ist, und wobei die Plattenoberseite (3) plan ausgebildet ist.

2. Touch-Eingabevorrichtung (1) nach Anspruch 1, wobei der Füllkörper (9) die Plattenunterseite (4) und die Touchsensorfläche (5) flächig kontaktiert.

3. Touch-Eingabevorrichtung (1) nach Anspruch 1 oder 2, wobei der Füllkörper (9) eine Füllkörperform aufweist, die komplementär zu einer Freiraumform des Freiraums (8) ausgebildet ist.

4. Touch-Eingabevorrichtung (1) nach wenigstens einem der vorangegangenen Ansprüche, wobei der Füllkörper (9) zumindest teilweise als Spritzgussteil oder 3D-Druckteil ausgebildet ist.

5. Touch-Eingabevorrichtung (1) nach wenigstens einem der vorangegangenen Ansprüche, wobei das mindestens eine Füllmaterial ein Polyamid ist oder zumindest ein Polyamid aufweist.

6. Touch-Eingabevorrichtung (1) nach wenigstens einem der vorangegangenen Ansprüche, wobei das mindestens eine Füllmaterial aus einem Gießharz gebildet ist oder zumindest ein Gießharz und/oder einen Klebstoff aufweist.

7. Touch-Eingabevorrichtung (1) nach wenigstens einem der vorangegangenen Ansprüche, wobei die Plattenunterseite (4) eine Mehrzahl von Abschrägflächen (7) aufweist, die in Form eines Facettenschliffs an der Plattenunterseite (4) angeordnet sind.

8. Touch-Eingabevorrichtung (1) nach wenigstens einem der vorangegangenen Ansprüche, wobei das Deckplattenmaterial Glas ist oder zumindest Glas aufweist.

9. Touch-Eingabevorrichtung (1) nach wenigstens einem der vorangegangenen Ansprüche, wobei die Permittivität des mindestens einen Füllmaterials maximal um 30% von der Permittivität des Deckplattenmaterials abweicht.

10. Touch-Eingabevorrichtung (1) nach wenigstens einem der vorangegangenen Ansprüche, wobei die Deckplatte (2) eine Gravur (12) und/oder einen Aufdruck aufweist.

11. Elektronisches System für ein Kraftfahrzeug, aufweisend mindestens eine Eingabevorrichtung, wobei die mindestens eine Eingabevorrichtung als Touch-Eingabevorrichtung (1) nach einem Ansprüche 1 bis 10 ausgebildet ist.

12. Kraftfahrzeug mit mindestens einem elektronischen System, wobei das mindestens eine elektronische System nach Anspruch 11 ausgebildet ist.

## Claims

1. Touch input apparatus (1) for operating a system of a motor vehicle, having a cover plate (2) made from a cover plate material with a plate upper side (3) and a plate lower side (4) and furthermore having a touch sensor surface (5), wherein the plate upper side (3) has an operating surface (6), and wherein the plate lower side (4) faces the cover plate (2) of the touch sensor surface (5), wherein the plate lower side (4) has at least one sloping surface (7) that is arranged at an angle with respect to the touch sensor surface (5), wherein a free space (8) is formed between the plate lower side (4) and the touch sensor surface (5), wherein the operating surface (6) at least partially projects over the free space (8), wherein a filling body (9) made of at least one filling material is arranged in the free space (8), and wherein the at least one filling material has a permittivity for electrical fields that is greater than a permittivity of air, wherein the at least one sloping surface (7) is arranged in a periphery region (11) of the cover plate (2), **characterized in that** the filling body (9) has a recess (10), in which the plate lower side (4) is accommodated, and wherein the plate upper side (3) is configured to be planar.

2. Touch input apparatus (1) according to Claim 1, wherein the filling body (9) is in surface contact with the plate lower side (4) and the touch sensor surface (5) .

3. Touch input apparatus (1) according to Claim 1 or 2, wherein the filling body (9) has a filling body shape which is configured to be complementary to a free space shape of the free space (8).

4. Touch input apparatus (1) according to at least one of the preceding claims, wherein the filling body (9) is configured at least partially as an injection moulded part or 3D printed part.

5. Touch input apparatus (1) according to at least one of the preceding claims, wherein the at least one filling material is a polyamide or at least includes a polyamide.

6. Touch input apparatus (1) according to at least one of the preceding claims, wherein the at least one filling material is formed from a cast resin or at least includes a cast resin and/or an adhesive.

7. Touch input apparatus (1) according to at least one of the preceding claims, wherein the plate lower side (4) has a plurality of sloping surfaces (7), which are arranged on the plate lower side (4) in the form of a facet cut.

8. Touch input apparatus (1) according to at least one of the preceding claims, wherein the cover plate material is glass or at least includes glass.

9. Touch input apparatus (1) according to at least one of the preceding claims, wherein the permittivity of the at least one filling material deviates by at most 30% from the permittivity of the cover plate material.

10. Touch input apparatus (1) according to at least one of the preceding claims, wherein the cover plate (2) exhibits an engraving (12) and/or a print.

11. Electronic system for a motor vehicle, having at least one input apparatus, wherein the at least one input apparatus is configured in the form of a touch input apparatus (1) according to one of Claims 1 to 10.

12. Motor vehicle having at least one electronic system, wherein the at least one electronic system is configured according to Claim 11.

## Revendications

1. Dispositif d'entrée tactile (1) destiné à commander un système d'un véhicule automobile, comprenant une plaque de recouvrement (2) constituée par un matériau de plaque de recouvrement, pourvue d'un côté supérieur de plaque (3) et d'un côté inférieur de plaque (4), et comprenant en outre une surface de capteur tactile (5), dans lequel le côté supérieur de plaque (3) comprend une surface de commande (6), et dans lequel le côté inférieur de plaque (4) de la plaque de recouvrement (2) est tourné vers la surface de capteur tactile (5),
dans lequel
le côté inférieur de plaque (4) comprend au moins une surface biseautée (7), qui est agencée obliquement par rapport à la surface de capteur tactile (5), dans lequel un espace libre (8) est formé entre le côté inférieur de plaque (4) et la surface de capteur tactile (5), dans lequel la surface de commande (6) surplombe au moins partiellement l'espace libre (8), dans lequel un corps de remplissage (9) constitué par au moins un matériau de remplissage est agencé dans l'espace libre (8), et dans lequel ledit au moins un matériau de remplissage présente une permittivité pour les champs électriques qui est supérieure à une permittivité de l'air, dans lequel ladite au moins une surface biseauté (7) est agencée au niveau d'une zone de bord (11) de la plaque de recouvrement (2), **caractérisé en ce que** le corps de remplissage (9) comprend une cavité (10), dans laquelle le côté inférieur de plaque (4) est logé, et dans lequel le côté supérieur de plaque (3) est configuré sous forme plane.

2. Dispositif d'entrée tactile (1) selon la revendication 1, dans lequel le corps de remplissage (9) est en contact en surface avec le côté inférieur de plaque (4) et la surface de capteur tactile (5).

3. Dispositif d'entrée tactile (1) selon la revendication 1 ou 2, dans lequel le corps de remplissage (9) présente une forme de corps de remplissage qui est configurée sous forme complémentaire à une forme d'espace libre de l'espace libre (8).

4. Dispositif d'entrée tactile (1) selon au moins l'une quelconque des revendications précédentes, dans lequel le corps de remplissage (9) est configuré au moins partiellement sous la forme d'une pièce moulée par injection ou d'une pièce d'impression 3D.

5. Dispositif d'entrée tactile (1) selon au moins l'une quelconque des revendications précédentes, dans lequel ledit au moins un matériau de remplissage est un polyamide ou comprend au moins un polyamide.

6. Dispositif d'entrée tactile (1) selon au moins l'une quelconque des revendications précédentes, dans lequel ledit au moins un matériau de remplissage est formé à partir d'une résine de coulée ou comprend au moins une résine de coulée et/ou un adhésif.

7. Dispositif d'entrée tactile (1) selon au moins l'une quelconque des revendications précédentes, dans lequel le côté inférieur de plaque (4) comprend une pluralité de surfaces biseautées (7), qui sont agencées sous la forme d'un affûtage en facettes au niveau du côté inférieur de plaque (4).

8. Dispositif d'entrée tactile (1) selon au moins l'une quelconque des revendications précédentes, dans lequel le matériau de plaque de recouvrement est du verre ou comprend au moins du verre.

9. Dispositif d'entrée tactile (1) selon au moins l'une quelconque des revendications précédentes, dans lequel la permittivité dudit au moins un matériau de remplissage diffère au plus de 30 % de la permittivité du matériau de plaque de recouvrement.

10. Dispositif d'entrée tactile (1) selon au moins l'une quelconque des revendications précédentes, dans lequel la plaque de recouvrement (2) comprend une gravure (12) et/ou une impression.

11. Système électronique pour un véhicule automobile, comprenant au moins un dispositif d'entrée, dans lequel ledit au moins un dispositif d'entrée est configuré sous la forme d'un dispositif d'entrée tactile (1) selon l'une quelconque des revendications 1 à 10.

12. Véhicule automobile pourvu d'au moins un système électronique, dans lequel ledit au moins un système électronique est configuré selon la revendication 11.
